# EUROPEAN PATENT SPECIFICATION

(11) **EP 3 786 819 B1**
(45) Date of publication and mention of the grant of the patent: **07.06.2023**
(21) Application number: 20193457.7
(22) Date of filing: 28.08.2020
(51) Int. Cl.: G06F 21/10, G06F 21/62

(54) **SOFTWARE LICENSE DISTRIBUTION**
VERTEILUNG VON SOFTWARELIZENZEN
DISTRIBUTION DE LICENCES LOGICIELLES

(30) Priority: 30.08.2019 GB 201912482
(43) Date of publication of application: 03.03.2021
(73) Proprietor: Mobilise Consulting Ltd, London SE11 5QY (GB)
(72) Inventor: WHITE, Hamish, London, SE11 5QY (GB); HOUSSEIN, Amr, London SE11 5QY (GB)
(74) Representative: Mishcon de Reya LLP

(56) References cited:
- EP-A1- 2 804 124
- WO-A2-2005/076104
- US-A1- 2004 039 916
- US-A1- 2005 289 072
- US-A1- 2018 173 891
- US-B1- 8 955 099

## Description

### Technical Field

This invention relates to a system for user authentication, particularly for use in a system for dynamic software license allocation.

### Background Art

In conventional software arrangements, known in the art *per se,* systems are typically set up such that a user wishing to access particular software will require a license to use that software or to access a service. The license, in effect, grants the user the right to use a copy of the software. Such licenses are ubiquitous across many different software environments, but by way of example include licenses to access a particular wireless network.

In an enterprise solution, an organisation may have access to a number of licenses, which may be acquired on a per-user basis, or may be acquired in bulk from the licensor and allocated to each user that requires use of the software individually.

When licenses are required to access software services (e.g. license to access a wireless network), it is desirable to have the ability to reuse those licenses across multiple user clients. Some solutions employ a 'floating software license' model, in which there are a 'pool' of licenses available to users, and when a user wishes to access the software, they request a license from that pool and these can be accessed concurrently by a defined number of end-users. Providing a license is available, one of the licenses is removed from pool and the user is provided with access to the software. If no license is available, the software can't be accessed. Once the user exits the software (or if the license expires), the license is returned to the pool for future use.

The Applicant has appreciated that there may be concerns regarding user anonymity with conventional software license distribution systems known in the art *per se.* Specifically, the software vendor (i.e. software provider) is generally able to track which license is allocated to which user, and determine how that license is being used. Similarly, in some prior art arrangements the user(s) may be able to see the specific license(s) in use which may be undesirable. The present invention seeks to improve the privacy of users in a system in which licenses are acquired from a license pool.

US 2004/039916 A1 appears to disclose a system and method for the distribution of digital licenses through a multi-level distribution chain using one or more clearinghouses. The system supports content providers, distributors, and end users. Content providers create and provide licenses. Distributors acquire licenses from content providers and upstream distributors, and can modify them in accordance with the terms of the original licenses. Distributors digitally sign modified licenses before providing to other users, and optionally extend licenses to create new licenses and distribute them.

### Summary of the Invention

In accordance with a first aspect, the present invention provides a software license distribution system as claimed in claim 1.

The first aspect of the present invention extends to a networked computer system as claimed in claim 12.

The first aspect of the present invention also extends to a method as claimed in claim 13.

The first aspect of the present invention further extends to a non-transitory computer-readable medium as claimed in claim 14.

Thus it will be appreciated by those skilled in the art that embodiments of the present invention provide an improved software license distribution system which sits between the software provider and the end client, where the distribution system holds a pool of licenses that it can draw from when an end client requests a license for software that is provided by the software provider. If the license pool is depleted (e.g. if all of the licenses held in the pool are already in use in other sessions), the distribution system requests a new license from the software provider and adds it to the pool.

The software license distribution system is also referred to herein as a 'dynamic user licensing allocation system', where these terms are interchangeable at least in the context of this disclosure.

The software provider does not generally have access to the database that stores the linked pairs of user credentials and tokens. As the license pool is held by the software license distribution system and because the licenses are distributed as a cryptographic token, the software provider does not have any knowledge of which users have access to the software, only that the user is authorised by means of a license that the software provider allocated to the software license distribution system. Thus the software license distribution system in accordance with embodiments of the present invention provides anonymity to the users, where the users may obtain floating licenses for use of the software product.

The decision logic and the verification logic may be separate hardware and/or software units, or these may be combined in a single hardware and/or software unit, e.g. as a 'decision engine' or a 'dynamic rules engine'. Thus the functions carried out by each of these logics may be conducted on the same physical device, or they may be carried out by separate devices within a system, e.g. a networked system. The term 'logic' as used herein will be understood by those skilled in the art to mean suitable hardware and/or software that carries out the associated function(s) and may, by way of non-limiting example only, include one or more of a software program or application, an integrated circuit, a processor, a microprocessor, a memory, a field programmable gate array (FPGA), an application specific integrated circuit (ASIC), a decision engine, a state machine (e.g. a finite state machine), or any other suitable means known in the art *per se.*

Similarly, the storage portion may be any suitable memory or storage unit. By way of non-limiting example, the storage portion may comprise at least one of a hard drive, a solid state storage drive, a server, a read only memory, a random access memory, a server, a cloud storage solution, a database, etc. A single storage portion may provide storage of the license pool together with the set of approved user credentials and/or the database in which the linked pair of cryptographic token(s) and user credential(s) are stored, or each of these may be stored in separate storage portions as appropriate. For example in some embodiments, the storage portion may comprise a database, wherein the license pool, the set of approved user credentials and/or the database in which the linked pair of cryptographic token(s) and user credential(s) are stored in respective tables of the database. In such embodiments, read/write operations may be carried out on each of the tables through the use of an appropriate query function in a manner known in the art *per se.*

It will be appreciated that there are a number of cryptographic functions, known in the art *per se,* that could be applied in order to generate the cryptographic token from the license. However, in some embodiments, the cryptographic function comprises an encryption function. For example, in some such embodiments, the cryptographic function comprises a private key cryptography function.

In some potentially overlapping embodiments, the cryptographic function comprises a hashing function.

In some potentially overlapping embodiments, the cryptographic function comprises combining the selected license key with a salt before the cryptographic token is generated. Those skilled in the art will appreciate that the term `salt' as user herein means random or pseudo-random data that is appended to or mixed with the selected license key. This advantageously ensures that even if the same license key is distributed to the same end user client multiple times, the cryptographic token will be different each time, further aiding in preserving the anonymity of the end user.

The software the requesting end user wishes to access could be locally available on the end user client itself, needing the cryptographic token in order to make the software available for operation, e.g. by 'unlocking' the software. However, in a set of embodiments, the requesting end user client uses the cryptographic token to source the software directly from the service provider. The requesting end user client provides the cryptographic token to the software provider, which upon receiving the token, grants access to the software. As the database linking the tokens to the user credentials is separate from the software provider, the software provider does not know the identity of the end user client, even when supplying the software to that end user client.

In a set of embodiments, the cryptographic token comprises the selected license key and a license password associated with the selected license key, wherein the software license distribution system is arranged to set the license password to an encrypted password derived from the user credential. For example, in a set of embodiments, the cryptographic function comprises encrypting a user credential with a private key to produce the encrypted password. In at least some embodiments, the user credential is a username or an email address, and the cryptographic function encrypts that username or email address to produce the encrypted password that is then used as the license password. A salt may, in some embodiments, be appended to the user credential prior to its encryption in order to prevent the same user credential resulting in the same license password each time. This salt may be in addition or an alternative to appending a salt to the license key as outlined above.

The software license distribution system described herein may be applicable to a wide range of different licensed software. However, in at least some embodiments, the software provider is arranged to provide a software service. In at least some such embodiments, the software service comprises a communications network. For example, in a set of embodiments, the software service comprises an access network. In a set of such embodiments, the access network comprises a Wi-Fi network and/or a mobile wireless network.

In some embodiments, the selected license key is returned to the license pool when the end user client releases said key. The software license distribution system may receive an indication from the end user client when the end user client no longer requires the allocated license key and return the selected license key to the license pool upon receiving that indication. Additionally or alternatively, the software license distribution system may, at least in some embodiments, allocate the selected license key to the end user client with a time limit, wherein upon expiration of said time limit, the selected license key is returned to the license pool.

Where the cryptographic token comprises the selected license key and a license password associated with the selected license key as outlined above, the software license distribution system may, at least in some embodiments, be arranged to reset the license password to a reset value when the selected license key is returned to the license pool. The reset value may be a static default value (e.g. specific to the license key or a generic default value) or it may be variable value such as a random value.

The user credentials may, at least in some embodiments, comprise a username or an email address. While in prior art systems in which the end user client communicates directly with the software provider it is possible for a username or password to be used, these would generally aid the software provider in tracing the activities of a user. However, as the user is provided with a token-based license in accordance with embodiments of the present invention, the use of such types of user credentials (i.e. personally identifying credentials) without compromising the user's anonymity, because these credentials are not passed to the software provider. Moreover, as outlined above, the user's credentials may be used in order to set a license password when generating the cryptographic token. The user credentials may additionally or alternatively comprise a password, passcode, and/or passphrase.

If the user credentials do not match any entry in the approved set of set of user credentials, the verification logic may, at least in some embodiments, be arranged to send an error message to the end user client. This error message may request that the user makes a further attempt to access the software license distribution system.

In some embodiments, the requesting end user client is a hardware device. However, in an alternative set of embodiments, the requesting end user client is a software application. It will be appreciated that the one or more end user clients may all be hardware devices, all be software applications, or may be a mix of these.

The end user client could communicate with the software license distribution system directly, however in some embodiments the interface comprises an application programming interface (API). The end user client may make an 'API call' in order to request authentication of supplied user credentials and request access to software from the software provider. This may advantageously allow the software license distribution system of the present invention to be used with a variety of different applications which may make use of the API in order to request licenses.

### Brief Description of the Drawings

Certain embodiments of the present invention will now be described with reference to the accompanying drawings, in which:
Fig. 1 is a block diagram of a prior art networked computer system for software license distribution;
Fig. 2 is a block diagram of a networked computer system including a software license distribution system in accordance with an embodiment of the present invention;
Fig. 3 is a schematic diagram showing the system architecture used in the system of Fig. 2;
Fig. 4 is a block diagram that shows the communication flow between the components of the system architecture of Fig. 3;
Fig. 5 is a logical data flow diagram illustrating negotiation during the dynamic user license allocation process;
Figs. 6A and 6B are schematic diagrams illustrating the benefit of dynamic user license allocation; and
Fig. 7 is a flow chart the tokenisation process used during the dynamic user license allocation process.

### Detailed Description

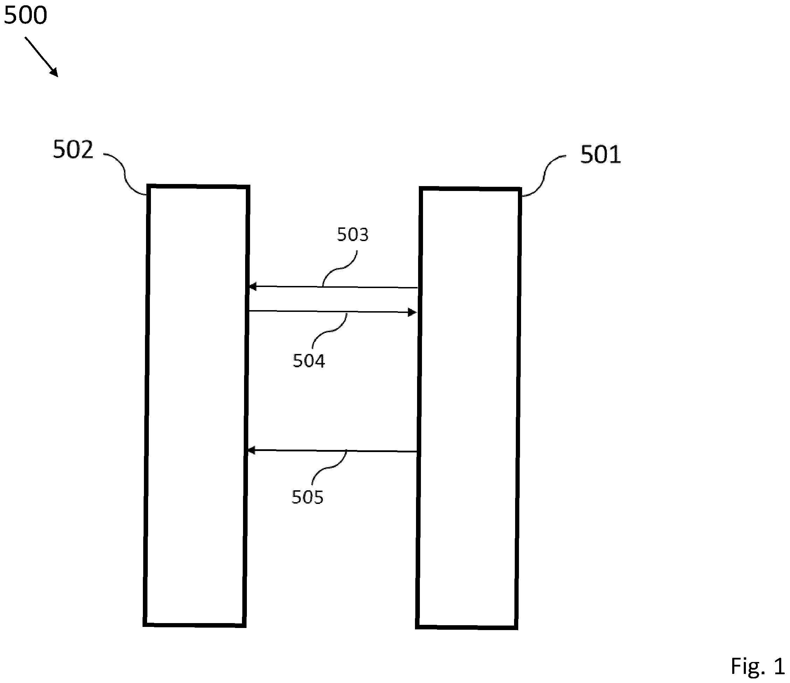

Fig. 1 is a block diagram of a prior art software license distribution system 500. In particular, Fig. 1 provides a high level illustration of the typical way a user 501 accessing a service provided by a vendor 502, i.e. the software provider.

In the system 500 of Fig. 1, a user 501 sends an access request 503 to the vendor 502 with user credentials which, in this particular example, include a unique identifier e.g. email, phone number, username etc. together with some form of password.

The vendor 502 validates the authentication details and grants the access request 504. Once the vendor 502 has validated the authentication details and granted the request, the user 501 is provided with access the service 505.

However, in this case, the vendor 502 is able to track the activities of the user 501 because the vendor is able to trace the service usage of the user 501 based on the details sent in the access request 503 (e.g. the email address or username of the user 501).

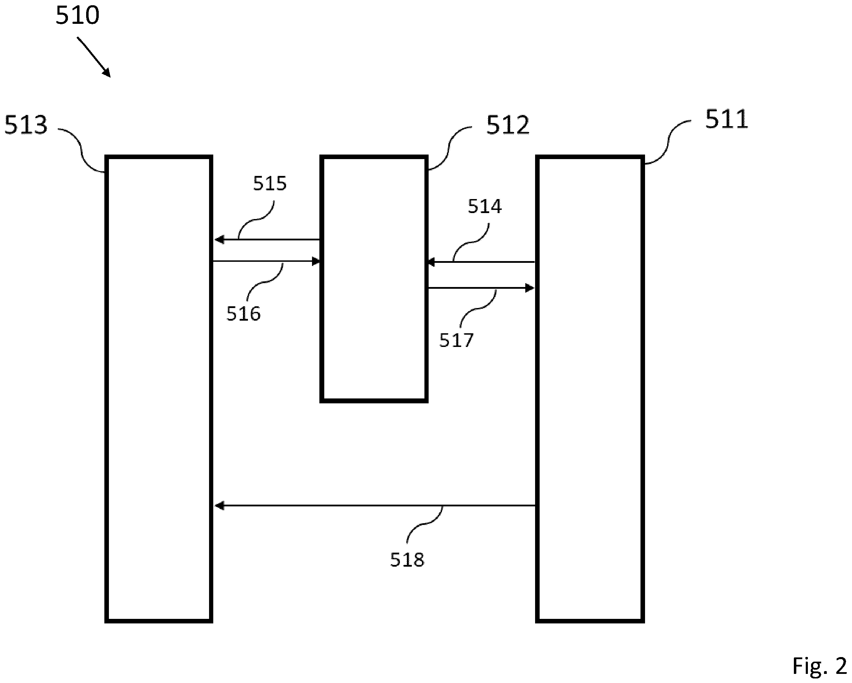

Fig. 2 a block diagram of a networked computer system 510 including a software license distribution system 512 in accordance with an embodiment of the present invention. As can be seen in Fig. 2, in the system 510 of Fig. 2, the user 511 accesses the service provided by the vendor 513 using the software license distribution system512, referred to hereinafter as a 'dynamic user licensing allocation system' 512, where these terms are interchangeable.

Initially, the user 511 sends an access request 514 to the dynamic user licensing allocation system 512 with authentication details which includes a unique identifier e.g. email, phone number, username etc. together with some form of password. Thus in the system 510 of the present invention, the authentication details are not sent to the vendor 513 itself.

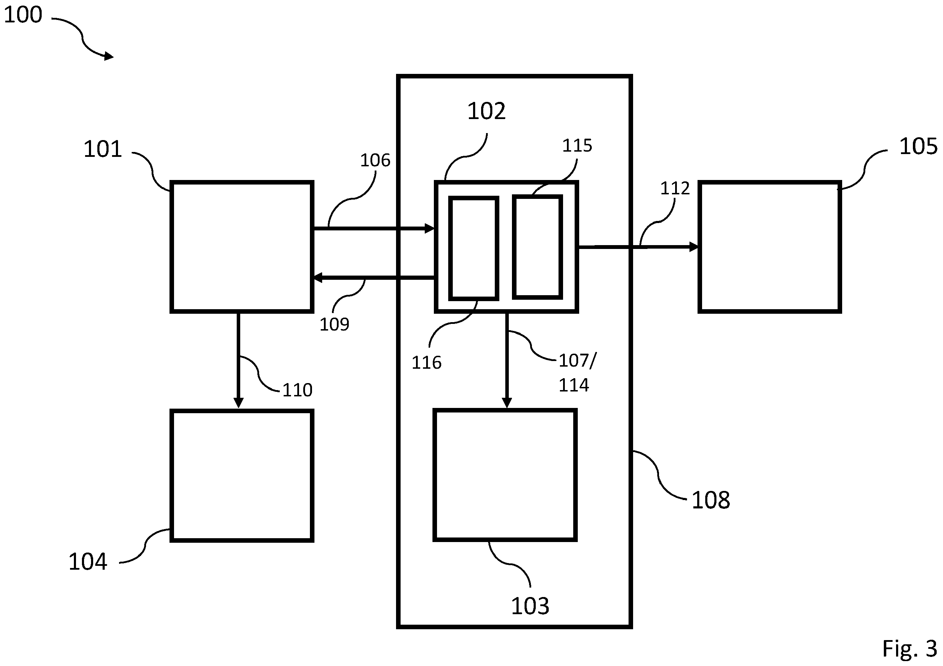

The dynamic user licensing allocation system 512 validates the authentication details and maps the user to a license. The dynamic user licensing allocation system 512 then sends an access request 515 that comprises encrypted details to the vendor 513. Importantly, the encrypted details do not allow the vendor 513 to trace back the access to a user or a person, but rather only to this particular session. The vendor then grants the access 516 which then the dynamic user licensing allocation system 512 confirms the access grant 517 to the user 511, who can then access the service 518. Further explanation of the manner in which licenses are allocated is provided with reference to Figs. 3 to 7 below.

Fig. 3 is a schematic representation of the architecture of a networked computer system 100 that includes a dynamic user licensing allocation system 108 in accordance with embodiments of the present invention.

Initially, the user requests authentication access to the software provided by the vendor 105, using user credentials 106. The dynamic rules engine 102, which includes a verification logic 115 and a decision logic 116, is arranged such that the verification logic 115 receives and identifies the user credentials 106 and sends a verification request 107 to an authentication database 103.

If the user is successfully authenticated by the authentication database 103, the decision logic 116 of the dynamic rules engine 102 will identify an unallocated license key from the available pool of vendor license keys if there is one available in the pool that it has access to.

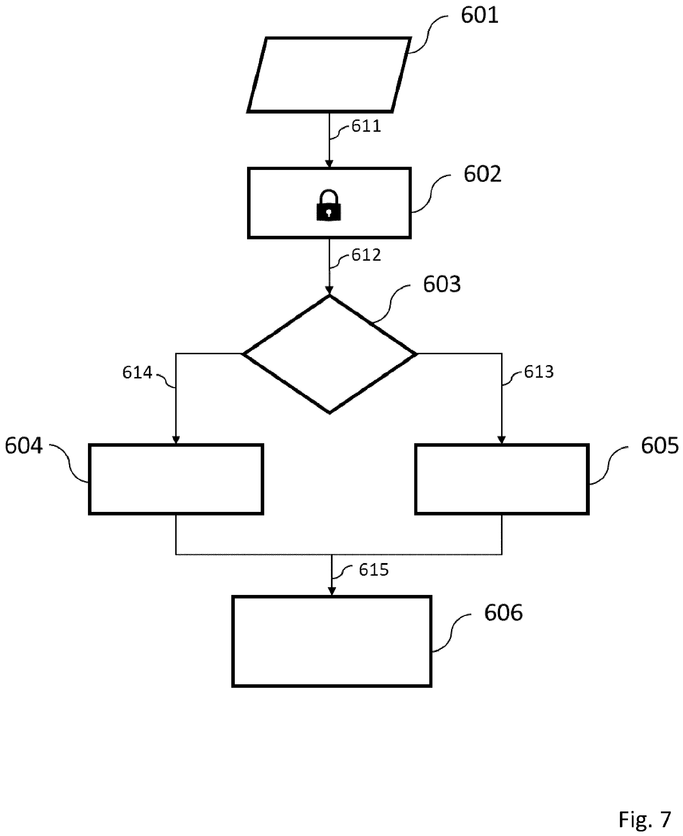

The identified license key is encoded in a unique token by the dynamic rules engine 102 and is mapped to user client in authentication database 103, in a manner described in further detail below with reference to Fig. 7. The unique token is sent 109 to the client 101, where the client 101 then sends an authenticate request 110 to the service 104.

Conversely, if no unallocated license keys exist in the authentication database 103, the decision logic 116 of the dynamic rules engine 102 requests 112 a new license key from the vendor 105 and encodes the license in a unique token which the dynamic rules engine 102 maps to user credentials 114 in the authentication database 103. The unique token including this new license key is sent 109 to the client 101, where the client 101 then sends an authenticate request 110 to the service 104.

When the user account expires or it becomes inactive, the associated license key is released and returned to the available pool of licenses for reallocation.

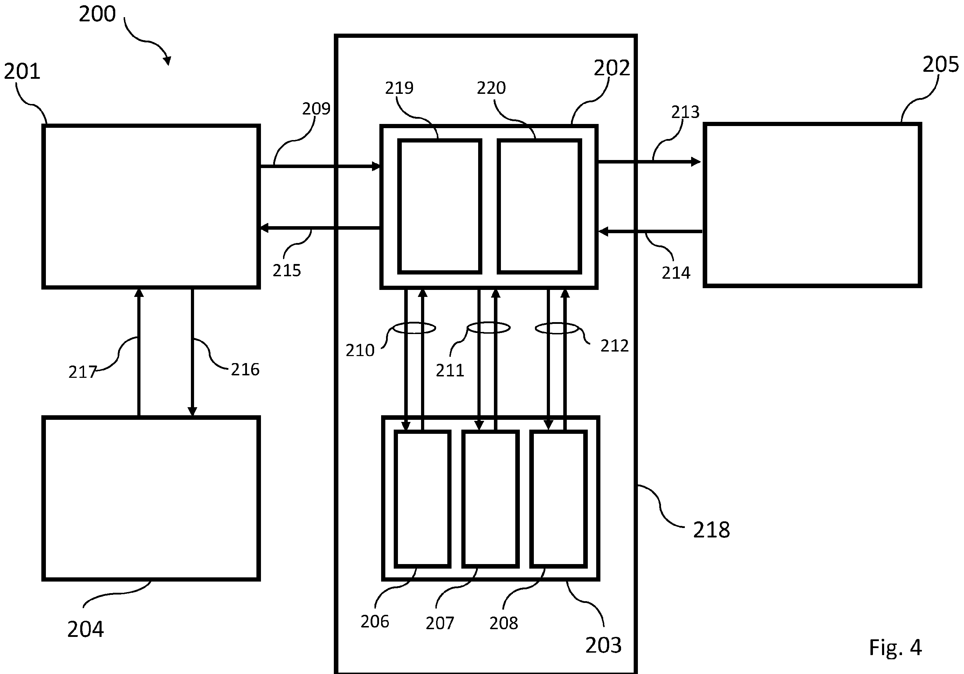

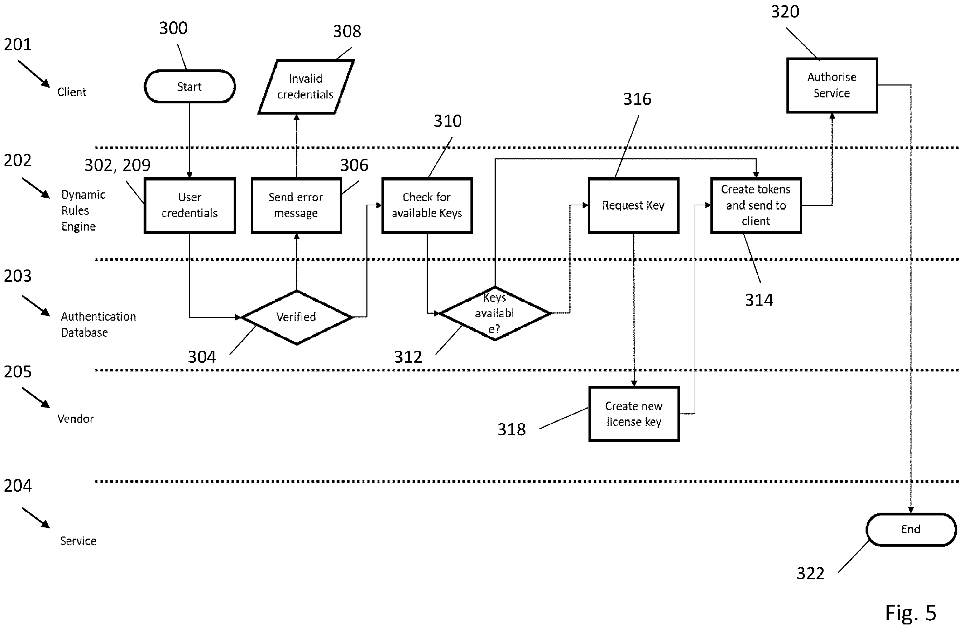

Fig. 4 shows a detailed communication flow between systems to negotiate a dynamic user license allocation in a networked computer system 200 including a dynamic user license allocation system 218 in accordance with an embodiment of the present invention. Fig. 5 is a logical data flow diagram illustrating the negotiation of the dynamic user license allocation process.

When the user initiates 300 an access request to the client 201, the client sends 302 an access request 209 to the dynamic rules engine 202, which includes a verification logic 219 and a decision logic 220. The verification logic 219 of the dynamic rules engine 202 validates 304 the user access details by comparing the user credential(s) to the database 203 via a database query 210 on the user authentication table 206 (i.e. a stored list of authorised credentials).

If the user credential(s) are not successfully verified, the dynamic rules engine 304 sends an error message 306 to the client 201 informing them that they have supplied invalid credentials 308.

Following successful user authentication, the decision logic 220 of the dynamic rules engine 202 looks up vendor licenses available 310, 312 via a database query 211 on the vendor licenses table 207 of the database 203.

If there are unallocated software licenses available in the vendor licenses table 207, the decision logic 220 of the dynamic rules engine 202 will allocate 314 an available license to the user via a database update query 212 in the user-license mapping table 208.

Conversely, if there are no vendor licenses available in vendor licenses table 207, the decision logic 220 of the dynamic rules engine 202 requests 316 a new vendor license 213 from the vendor 205. Once supplied 318 by the vendor 205, the new license details 214 are stored in the vendor licenses table 207 via an insert query 211, and then the new license is allocated 314 to the user in the database 203 via a database update query 212 in the user-license mapping table 208 of the database 203.

Regardless of whether an existing or new license key is used, the allocation 314 of the license involves the creation of a cryptographic token comprising the allocated license key, as described in further detail with reference to Fig. 7.

The dynamic rules engine responds to the client 201 with the license details 215. The client 201 then uses 320 these license details 215 to send an access request 216 for the service 204, and the service 204 is granted access 217 to the service 204 upon validation of the license, ending 322 the allocation process.

Once a client session to the service 201 terminates or expires, the dynamic rules engine 202 updates the user-license mapping table 208 and the vendor licenses table 207 to mark the vendor license as being available again.

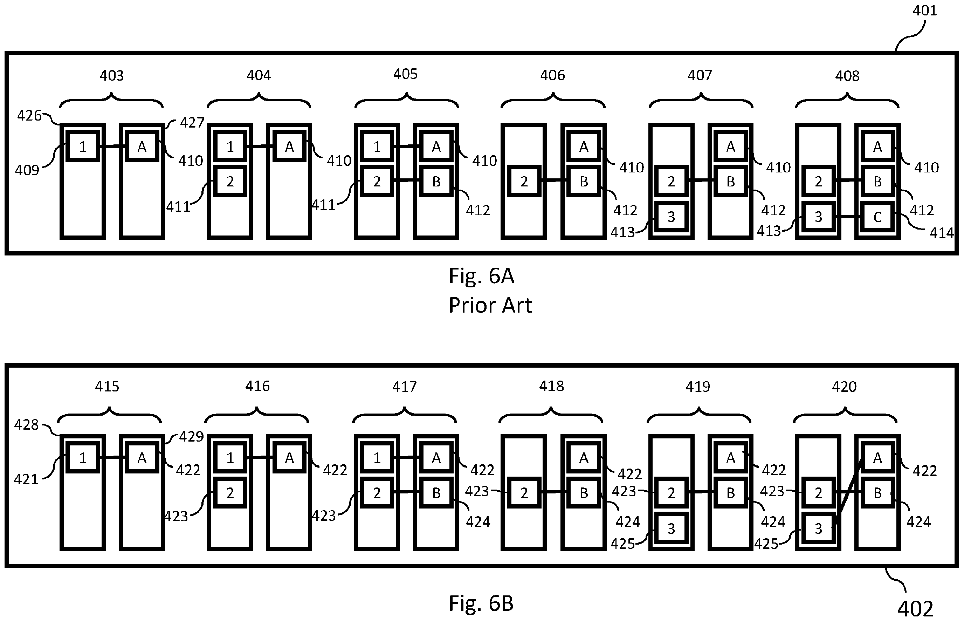

Figs. 6A and 6B illustrate the benefits associated with a software license distribution system provided by embodiments of the present invention. Specifically, Fig. 6A shows a prior art license allocation scheme, while Fig. 6B shows a dynamic user license allocation scheme in accordance with embodiments of the present invention.

The block 401 represents a prior art 'one-to-one' license allocation process which is known in the art *per se.* In this block 401, the relationship between a pipeline 426 and a license pool 427 throughout the license allocation process at different stages in time is shown.

At an initial time 403, user 1 409 already has access to the service, and is allocated license A 410. Subsequently, at time 404, a further user, user 2 411, requires access to the service. At time 405, a new license, license B 412 is allocated to user 2 412. After some time, at time 406, user 1 409 terminates its service session, leaving license A 410 unallocated.

At time 407 a new user, user 3 413, requires access to the service and subsequently, at time 408, a new license, license C 414 is allocated to user 3 413.

As outlined above, Fig. 6B shows a dynamic user license allocation scheme in accordance with embodiments of the present invention. The block 402 represents the dynamic user allocation process. In this block 402, the relationship between a pipeline 428 and a license pool 429 throughout the license allocation process at different stages in time is shown.

Initially at time 415, user 1 421 already has access to the service, and is allocated license A 422. At time 416 a second user, user 2 423, requires access to the service, and as there are no available (i.e. unallocated) licenses, a new license, license B 424 is acquired as outlined above with reference to Figs. 4 and 5, and this new license B 424 is allocated to user 2 423 at time 417.

At time 418, user 1 terminates its service session, leaving license A 422 unallocated. When, at time 419, user 3 425 requires access to the service, this available unallocated license, license A 422, is allocated to user 3 425 at time 420.

Those skilled in the art will appreciate that while in the one-to-one license allocation process of Fig. 6A the system had to acquire three licenses in order to provide the service to three users, the dynamic user allocation process of Fig. 6B requires only two licenses to offer the service to the same three users in the exemplary scenario described. Moreover, the vendor in the dynamic user allocation process of Fig. 6B is unable to determine the identity of any of the users with access to the service, and is also unable to tell whether the license A has been re-allocated to the original user (i.e. user 1) or to a new user (i.e. user 3) due to the tokenisation of the license, as described in further detail below with reference to Fig. 7.

Fig. 7 illustrates how the tokenization of user credentials ensures that user anonymity is maintained such that the vendor cannot identify the user.

Initially, the user 601 requests access with their personal username and personal password. The dynamic user licensing allocation system encrypts the user's username using a private key to generate a new license password 602. The dynamic user licensing allocation system then checks for available license keys 603.

Each license key is typically a string of characters, e.g. a random sequence of alphanumeric characters and/or other symbols. Associated with each license key is a license password, that must be provided to the vendor by a user in order to prove that the user is authorised to use that license. When the dynamic user licensing allocation system allocates a license to a particular user, the system sets the license password to a value generated cryptographically, typically by encrypting the user's credentials (e.g. their personal username or personal email address supplied as the user credentials, or at least part of the user credentials) with a private key. The license password can be set to this generated password, and the license can then be provided to the user together with this newly generated license password so as to allow the user to access the software service provided by the vendor.

If there are license keys available 613, the dynamic user licensing allocation system will set the license password associated with an available license to the newly generated license password 602 and allocate that license key to the user 606. However, if there are no license keys available 614, the dynamic user licensing allocation system generates a new random license key with the vendor 604 and sets the license password to match the newly generated license password 602. The dynamic user licensing allocation system then allocates the new license key to the user 606.

The next time the user tries to access the service, the user enters their personal email and password, and the dynamic user licensing allocation system will map the user to the allocated license key and associated license password and pass those to the vendor (i.e. it passes only the license key and license password, not the user's personal email or personal password). Thus even if the vendor is able to determine the identity of a specific device it is communicating with, the vendor cannot identify the user using the service or track it to any specific person using that device. The license key and license password pair are a cryptographic token that may be passed to the user to provide access to the software service.

The dynamic user licensing allocation system thus authorises the user to the vendor, but then 'sits out' of further communications, and thus is unable to monitor user data usage patterns and also cannot see the exchanged data itself, providing further privacy benefits for the user.

When the user no longer has a need for the license and the license is returned to the pool, the dynamic user licensing allocation can reset the password to some other value, e.g. a random value or a default value, until the license is needed again, e.g. by the same user or by a different user, at which time the license password can be changed once more to a user-specific password generated from the user's credentials as outlined above.

When generating the license password, a salt (e.g. a random or pseudorandom string) may be appended to the user's credential (e.g. the username or email address used to generate the license password) prior to encryption with the private key such that the license password generated for a given user is different each time, further ensuring that the vendor cannot glean information regarding a user's identity by observing the same license password multiple times.

Thus it will be appreciated by those skilled in the art that embodiments of the present invention provide an improved software license distribution system in which, because the licenses are distributed as a session-specific token, the software provider does not have any knowledge of which specific users have access to the software, improving the anonymity of the users. Similarly, the software license distribution system does not have any knowledge of the usage pattern or the actual data of the user. Thus, advantageously, no single party is able to link the user's identity with the user's usage data or patterns, yielding improvements in the privacy of the license distribution compared with conventional systems known in the art *per se.*

While specific embodiments of the present invention have been described in detail, it will be appreciated by those skilled in the art that the embodiments described in detail are not limiting on the scope of the claimed invention.

## Claims

1. A software license distribution system (108, 218, 512) arranged for connection between a software provider (105, 205, 513) and one or more end user clients (101, 201, 511), said software license distribution system (108, 218, 512) comprising:
a storage portion arranged to store a license pool (207) comprising one or more software licenses from the software provider (105, 205, 513);
an interface arranged to receive a request (209, 514) for a software license from a requesting end user client (101, 201, 511), said request (209, 514) including a user credential (106, 114);
a verification logic (115, 219) arranged to receive said user credential (106, 114) and to compare said user credential (106, 114) to a set of approved user credentials (103, 206), wherein the verification logic (115, 219) produces a verification flag only when the user credentials (106, 114) match an entry in the set of approved user credentials (103, 206); and
a decision logic (116, 220) arranged such that, when the verification flag has been produced by the verification logic (115, 219), the decision logic (116, 220) determines whether there is an available license (310, 312) in the license pool (207) and such that:
when there is an available license key (310, 312) in the license pool (207), the decision logic (116, 220) selects the available license key (310, 312) as a selected license key (215);
**characterized in that**:
when there is not an available license key in the license pool (207), the decision logic sends a request for a new license key to the software provider (105, 205, 513) and, when it receives the new license key (213, 214) from the software provider (105, 205, 513), selects the new license key (213, 214) as the selected license key (215);
the decision logic (116, 220) being further arranged to produce a cryptographic token (109) comprising the selected license key (215) using a cryptographic function;
wherein the software license distribution system (108, 218, 512) sends the cryptographic token (109) to the requesting end user client (101, 201, 511) and records the cryptographic token (109) and the user credential (106, 114) as a linked pair in a database (208), wherein the database (208) linking the tokens (109) to the user credentials (106, 114) is separate from the software provider (105, 205, 513);
wherein the requesting end user client (101, 201, 511) provides the cryptographic token (109) to the software provider (105, 205, 513), which upon receiving the token (109), grants access to the software; and
wherein the user credential (106, 114) is not sent to the software provider (105, 205, 513).

2. The software license distribution system (108, 218, 512) as claimed in claim 1, wherein the cryptographic function comprises an encryption function.

3. The software license distribution system (108, 218, 512) as claimed in claim 2, wherein the cryptographic token (109) comprises the selected license key (215) and a license password (602) associated with the selected license key (215), wherein the software license distribution system (108, 218, 512) is arranged to set the license password to an encrypted password derived from the user credential (106, 114).

4. The software license distribution system (108, 218, 512) as claimed in claim 3, wherein the user credential (106, 114) is encrypted to produce the encrypted password, optionally wherein a salt is added to the user credential (106, 114) before the user credential (106, 114) is encrypted to produce the encrypted password.

5. The software license distribution system (108, 218, 512) as claimed in any of claims 2 to 5, wherein the cryptographic function comprises a private key cryptography function, and/or wherein the cryptographic function comprises a hashing function.

6. The software license distribution system (108, 218, 512) as claimed in any preceding claim, wherein the cryptographic function comprises combining the selected license key (215) with a salt before the cryptographic token (109) is generated.

7. The software license distribution system (108, 218, 512) as claimed in any preceding claim, wherein the requesting end user client (101, 201, 511) uses the cryptographic token (109) to source the software directly from the service provider (105, 205, 513).

8. The software license distribution system (108, 218, 512) as claimed in any preceding claim, wherein the software provider (105, 205, 513) is arranged to provide a software service (204, 518).

9. The software license distribution system (108, 218, 512) as claimed in claim 8, wherein the software service (204, 518) comprises a communications network, optionally wherein the communications network comprises an access network, further optionally wherein the access network comprises a Wi-Fi network and/or a mobile wireless network.

10. The software license distribution system (108, 218, 512) as claimed in any preceding claim, arranged such that the selected license key (215) is returned to the license pool (207) when the end user client (101, 201, 511) releases said key.

11. The software license distribution system (108, 218, 512) as claimed in any preceding claim, arranged to allocate the selected license key (215) to the end user client (101, 201, 511) with a time limit, wherein upon expiration of said time limit, the selected license key (215) is returned to the license pool (207).

12. A networked computer system (100, 200, 510) comprising a software license distribution system according to claim 1 (108, 218, 512), a software provider (105, 205, 513), and one or more end user clients (101, 201, 511), wherein the software license distribution system (108, 218, 512) is connected between the software provider (105, 205, 513) and the end user clients (101, 201, 51).

13. A method of operating a software license distribution system (108, 218, 512) connected between an external software provider (105, 205, 513) and one or more end user clients (101, 201, 511), said method comprising:
storing a license pool (207) comprising one or more software licenses from the external software provider (105, 205, 513);
receiving a request (209, 514) for a software licence from a requesting end user client (101, 201, 511), said request (209, 514) including a user credential (106, 114);
comparing said user credential to a set of approved user credentials (103, 206), and producing a verification flag only when the user credentials (106, 114) match an entry in the set of approved user credentials (103, 206);
when the verification flag has been produced, determining whether there is an available license (310, 312) in the license pool (207) and such that:
when there is an available license key (310, 312) in the license pool (207), the decision logic (116, 220) selects the available license key (310, 312) as a selected license key (215);
**characterized in that**:
when there is not an available license key in the license pool (207), sending a request for a new license key to the external software provider (105, 205, 513) and, upon receiving the new license key from the external software provider (105, 205, 513), selecting the new license key as the selected license key (215);
producing a cryptographic token (109) comprising the selected license key (215) using a cryptographic function; and
sending the cryptographic token (109) to the requesting end user client (101, 201, 511) and recording the cryptographic token (109) and the user credential (106, 114) as a linked pair in a database (208), wherein the database (208) linking the tokens (109) to the user credentials (106, 114) is separate from the software provider (105, 205, 513);
wherein the requesting end user client (101, 201, 511) provides the cryptographic token (109) to the software provider (105, 205, 513), which upon receiving the token (109), grants access to the software; and
wherein the user credential (106, 114) is not sent to the software provider (105, 205, 513).

14. A non-transitory computer-readable medium comprising instructions that, when executed on a suitable processor, cause the processor to carry out steps comprising:
storing a license pool (207) comprising one or more software licenses from the external software provider (105, 205, 513);
receiving a request (209, 514) for a software licence from a requesting end user client (101, 201, 511), said request (209, 514) including a user credential;
comparing said user credential to a set of approved user credentials (103, 206), and producing a verification flag only when the user credentials (106, 114) match an entry in the set of approved user credentials (103, 206);
when the verification flag has been produced, determining whether there is an available license (310, 312) in the license pool (207) and such that:
when there is an available license key (310, 312) in the license pool (207), the decision logic (116, 220) selects the available license key (310, 312) as a selected license key (215);
**characterized in that**:
when there is not an available license key in the license pool (207), sending a request for a new license key to the external software provider (105, 205, 513) and, upon receiving the new license key from the external software provider (105, 205, 513), selecting the new license key as the selected license key (215);
producing a cryptographic token (109) comprising the selected license key (215) using a cryptographic function; and
sending the cryptographic token (109) to the requesting end user client (101, 201, 511) and recording the cryptographic token (109) and the user credential (106, 114) as a linked pair in a database (208), wherein the database (208) linking the tokens (109) to the user credentials (106, 114) is separate from the software provider (105, 205, 513);
wherein the requesting end user client (101, 201, 511) provides the cryptographic token (109) to the software provider (105, 205, 513), which upon receiving the token (109), grants access to the software; and
wherein the user credential (106, 114) is not sent to the software provider (105, 205, 513).

## Patentansprüche

1. Softwarelizenz-Verteilungssystem (108, 218, 512), das für eine Verbindung zwischen einem Softwareanbieter (105, 205, 513) und einem oder mehreren Endbenutzer-Clients (101, 201, 511) eingerichtet ist, wobei das Softwarelizenz-Verteilungssystem (108, 218 , 512) umfasst:
einen Speicherabschnitt, der dazu eingerichtet ist, einen Lizenzpool (207) zu speichern, der eine oder mehrere Softwarelizenzen von dem Softwareanbieter (105, 205, 513) umfasst,
eine Schnittstelle, die dazu eingerichtet ist, eine Anforderung (209, 514) nach einer Softwarelizenz von einem anfordernden Endbenutzer-Client (101, 201, 511) zu empfangen, wobei die Anforderung (209, 514) einen Benutzer-Berechtigungsnachweis (106, 114) enthält;
eine Verifizierungslogik (115, 219), die dazu eingerichtet ist, den Benutzer-Berechtigungsnachweis (106, 114) zu empfangen und den Benutzer-Berechtigungsnachweis (106, 114) mit einem Satz genehmigter Benutzer-Berechtigungsnachweise (103, 206) zu vergleichen, wobei die Verifizierungslogik (115, 219) nur dann ein Verifizierungs-Flag erzeugt, wenn die Benutzer-Berechtigungsnachweise (106, 114) mit einem Eintrag in dem Satz genehmigter Benutzer-Berechtigungsnachweise (103, 206) übereinstimmen; und
eine Entscheidungslogik (116, 220), die so eingerichtet ist, dass, wenn das Verifizierungs-Flag von der Verifizierungslogik (115, 219) erzeugt worden ist, die Entscheidungslogik (116, 220) bestimmt, ob es eine verfügbare Lizenz (310, 312) in dem Lizenzpool (207) gibt, und derart, dass:
wenn es einen verfügbaren Lizenzschlüssel (310, 312) im Lizenzpool (207) gibt, die Entscheidungslogik (116, 220) den verfügbaren Lizenzschlüssel (310, 312) als einen ausgewählten Lizenzschlüssel (215) auswählt;
**dadurch gekennzeichnet, dass**:
wenn es keinen verfügbaren Lizenzschlüssel im Lizenzpool gibt (207), die Entscheidungslogik eine Anforderung nach einem neuen Lizenzschlüssel an den Softwareanbieter (105, 205, 513) sendet, und, wenn sie den neuen Lizenzschlüssel (213, 214) vom Softwareanbieter (105, 205, 513) empfängt, sie den neuen Lizenzschlüssel (213, 214) als den ausgewählten Lizenzschlüssel (215) auswählt;
wobei die Entscheidungslogik (116, 220) ferner dazu eingerichtet ist, unter Verwendung einer kryptografischen Funktion ein kryptografisches Token (109) zu erzeugen, das den ausgewählten Lizenzschlüssel (215) umfasst,
wobei das Softwarelizenz-Verteilungssystem (108, 218, 512) das kryptografische Token (109) an den anfordernden Endbenutzer-Client (101, 201, 511) sendet und das kryptografische Token (109) und den Benutzer-Berechtigungsnachweis (106, 114) als verknüpftes Paar in einer Datenbank (208) aufzeichnet, wobei die Datenbank (208), die die Token (109) mit den Benutzer-Berechtigungsnachweisen (106, 114) verknüpft, von dem Softwareanbieter (105, 205, 513) getrennt ist,
wobei der anfordernde Endbenutzer-Client (101, 201, 511) das kryptografische Token (109) dem Softwareanbieter (105, 205, 513) bereitstellt, der nach Empfang des Tokens (109) Zugriff auf die Software gewährt; und
wobei der Benutzer-Berechtigungsnachweis (106, 114) nicht an den Softwareanbieter (105, 205, 513) gesendet wird.

2. Softwarelizenz-Verteilungssystem (108, 218, 512) nach Anspruch 1, wobei die kryptografische Funktion eine Verschlüsselungsfunktion umfasst.

3. Softwarelizenz-Verteilungssystem (108, 218, 512) nach Anspruch 2, wobei das kryptografische Token (109) den ausgewählten Lizenzschlüssel (215) und ein dem ausgewählten Lizenzschlüssel (215) zugeordnetes Lizenzpasswort (602) umfasst, wobei das Softwarelizenz-Verteilungssystem (108, 218, 512) dazu eingerichtet ist, das Lizenzpasswort auf ein verschlüsseltes Passwort einzustellen, das von dem Benutzer-Berechtigungsnachweis (106, 114) abgeleitet ist.

4. Softwarelizenz-Verteilungssystem (108, 218, 512) nach Anspruch 3, wobei der Benutzer-Berechtigungsnachweis (106, 114) verschlüsselt wird, um das verschlüsselte Passwort zu erzeugen, optional wobei dem Benutzer-Berechtigungsnachweis (106, 114) ein Salt hinzugefügt wird, bevor der Benutzer-Berechtigungsnachweis (106, 114) verschlüsselt wird, um das verschlüsselte Passwort zu erzeugen.

5. Softwarelizenz-Verteilungssystem (108, 218, 512) nach einem der Ansprüche 2 bis 5, wobei die kryptografische Funktion eine Privatschlüssel-Kryptografiefunktion umfasst und/oder wobei die kryptografische Funktion eine Hashing-Funktion umfasst.

6. Softwarelizenz-Verteilungssystem (108, 218, 512) nach einem der vorhergehenden Ansprüche, wobei die kryptografische Funktion das Kombinieren des ausgewählten Lizenzschlüssels (215) mit einem Salt umfasst, bevor das kryptografische Token (109) generiert wird.

7. Softwarelizenz-Verteilungssystem (108, 218, 512) nach einem der vorhergehenden Ansprüche, wobei der anfordernde Endbenutzer-Client (101, 201, 511) das kryptografische Token (109) verwendet, um die Software direkt von dem Dienstanbieter (105, 205, 513) zu beziehen.

8. Softwarelizenz-Verteilungssystem (108, 218, 512) nach einem der vorhergehenden Ansprüche, wobei der Softwareanbieter (105, 205, 513) dazu eingerichtet ist, einen Softwaredienst (204, 518) bereitzustellen.

9. Softwarelizenz-Verteilungssystem (108, 218, 512) nach Anspruch 8, wobei der Softwaredienst (204, 518) ein Kommunikationsnetzwerk umfasst, optional wobei das Kommunikationsnetzwerk ein Zugangsnetzwerk umfasst, ferner optional wobei das Zugangsnetzwerk ein WLAN-Netzwerk und/oder ein mobiles drahtloses Netzwerk umfasst.

10. Softwarelizenz-Verteilungssystem (108, 218, 512) nach einem der vorhergehenden Ansprüche, das so eingerichtet ist, dass der ausgewählte Lizenzschlüssel (215) an den Lizenzpool (207) zurückgegeben wird, wenn der Endbenutzer-Client (101, 201, 511) den Schlüssel freigibt.

11. Softwarelizenz-Verteilungssystem (108, 218, 512) nach einem der vorhergehenden Ansprüche, das dazu eingerichtet ist, den ausgewählten Lizenzschlüssels (215) dem Endbenutzer-Client (101, 201, 511) mit einer zeitlichen Begrenzung zuzuweisen, wobei bei Ablauf von der zeitlichen Begrenzung der ausgewählte Lizenzschlüssel (215) an den Lizenzpool (207) zurückgegeben wird.

12. Vernetztes Computersystem (100, 200, 510), umfassend ein Softwarelizenz-Verteilungssystem nach Anspruch 1
(108, 218, 512), einen Softwareanbieter (105, 205, 513) und
einen oder mehrere Endbenutzer-Clients (101, 201, 511), wobei das Softwarelizenz-Verteilungssystem (108, 218, 512) zwischen dem Softwareanbieter (105, 205, 513) und den Endbenutzer-Clients (101, 201, 51) angeschlossen ist.

13. Verfahren zum Betreiben eines Softwarelizenz-Verteilungssystems (108, 218, 512), das zwischen einem externen Softwareanbieter (105, 205, 513) und einem oder mehreren Endbenutzer-Clients (101, 201, 511) angeschlossen ist, wobei das Verfahren umfasst:
Speichern eines Lizenzpools (207), der eine oder mehrere Softwarelizenzen von dem externen Softwareanbieter (105, 205, 513) umfasst,
Empfangen einer Anforderung (209, 514) nach einer Softwarelizenz von einem anfordernden Endbenutzer-Client (101, 201, 511), wobei die Anforderung (209, 514) einen Benutzer-Berechtigungsnachweis (106, 114) enthält;
Vergleichen des Benutzer-Berechtigungsnachweises mit einem Satz genehmigter Benutzer-Berechtigungsnachweise (103, 206) und Erzeugen eines Verifizierungsflags nur dann, wenn die Benutzer-Berechtigungsnachweise (106, 114) mit einem Eintrag in dem Satz genehmigter Benutzer-Berechtigungsnachweise (103, 206) übereinstimmen;
wenn das Verifizierungsflag erzeugt worden ist, Bestimmen, ob es eine verfügbare Lizenz (310, 312) in dem Lizenzpool (207) gibt, und derart, dass:
wenn es einen verfügbaren Lizenzschlüssel (310, 312) im Lizenzpool (207) gibt, die Entscheidungslogik (116, 220) den verfügbaren Lizenzschlüssel (310, 312) als einen ausgewählten Lizenzschlüssel (215) auswählt;
**dadurch gekennzeichnet, dass**:
wenn es keinen verfügbaren Lizenzschlüssel im Lizenzpool (207) gibt, Senden einer Anforderung nach einem neuen Lizenzschlüssel an den externen Softwareanbieter (105, 205, 513) und bei Empfang des neuen Lizenzschlüssels vom externen Softwareanbieter (105, 205, 513), Auswählen des neuen Lizenzschlüssels als den ausgewählten Lizenzschlüssel (215);
Erzeugen eines kryptografischen Tokens (109), das den ausgewählten Lizenzschlüssel (215) umfasst, unter Verwendung einer kryptografischen Funktion; und
Senden des kryptografischen Tokens (109) an den anfordernden Endbenutzer-Client (101, 201, 511) und Aufzeichnen des kryptografischen Tokens (109) und des Benutzer-Berechtigungsnachweises (106, 114) als verknüpftes Paar in einer Datenbank (208), wobei die Datenbank (208), die die Token (109) mit den Benutzer-Berechtigungsnachweisen (106, 114) verknüpft, von dem Softwareanbieter (105, 205, 513) getrennt ist,
wobei der anfordernde Endbenutzer-Client (101, 201, 511) das kryptografische Token (109) dem Softwareanbieter (105, 205, 513) bereitstellt, der nach Empfang des Tokens (109) Zugriff auf die Software gewährt; und
wobei der Benutzer-Berechtigungsnachweis (106, 114) nicht an den Softwareanbieter (105, 205, 513) gesendet wird.

14. Nicht flüchtiges computerlesbares Medium, umfassend Anweisungen, die, wenn sie von einem geeigneten Prozessor ausgeführt werden, den Prozessor veranlassen, Schritte durchzuführen, die umfassen:
Speichern eines Lizenzpools (207), der eine oder mehrere Softwarelizenzen von dem externen Softwareanbieter (105, 205, 513) umfasst,
Empfangen einer Anforderung (209, 514) nach einer Softwarelizenz von einem anfordernden Endbenutzer-Client (101, 201, 511), wobei die Anforderung (209, 514) einen Benutzer-Berechtigungsnachweis enthält;
Vergleichen des Benutzer-Berechtigungsnachweises mit einem Satz genehmigter Benutzer-Berechtigungsnachweise (103, 206) und Erzeugen eines Verifizierungsflags nur dann, wenn die Benutzer-Berechtigungsnachweise (106, 114) mit einem Eintrag in dem Satz genehmigter Benutzer-Berechtigungsnachweise (103, 206) übereinstimmen;
wenn das Verifizierungsflag erzeugt worden ist, Bestimmen, ob es eine verfügbare Lizenz (310, 312) in dem Lizenzpool (207) gibt, und derart, dass:
wenn es einen verfügbaren Lizenzschlüssel (310, 312) im Lizenzpool (207) gibt, die Entscheidungslogik (116, 220) den verfügbaren Lizenzschlüssel (310, 312) als einen ausgewählten Lizenzschlüssel (215) auswählt;
**dadurch gekennzeichnet, dass**:
wenn es keinen verfügbaren Lizenzschlüssel im Lizenzpool (207) gibt, Senden einer Anforderung nach einem neuen Lizenzschlüssel an den externen Softwareanbieter (105, 205, 513) und bei Empfang des neuen Lizenzschlüssels vom externen Softwareanbieter (105, 205, 513), Auswählen des neuen Lizenzschlüssels als den ausgewählten Lizenzschlüssel (215);
Erzeugen eines kryptografischen Tokens (109), das den ausgewählten Lizenzschlüssel (215) umfasst, unter Verwendung einer kryptografischen Funktion; und
Senden des kryptografischen Tokens (109) an den anfordernden Endbenutzer-Client (101, 201, 511) und Aufzeichnen des kryptografischen Tokens (109) und des Benutzer-Berechtigungsnachweises (106, 114) als verknüpftes Paar in einer Datenbank (208), wobei die Datenbank (208), die die Token (109) mit den Benutzer-Berechtigungsnachweisen (106, 114) verknüpft, von dem Softwareanbieter (105, 205, 513) getrennt ist,
wobei der anfordernde Endbenutzer-Client (101, 201, 511) das kryptografische Token (109) dem Softwareanbieter (105, 205, 513) bereitstellt, der nach Empfang des Tokens (109) Zugriff auf die Software gewährt; und
wobei der Benutzer-Berechtigungsnachweis (106, 114) nicht an den Softwareanbieter (105, 205, 513) gesendet wird.

## Revendications

1. Système de distribution de licence logicielle (108, 218, 512) agencé pour une connexion entre un fournisseur de logiciel (105, 205, 513) et un ou plusieurs clients utilisateurs finaux (101, 201, 511), ledit système de distribution de licence logicielle (108, 218 , 512) comprenant :
une partie de stockage agencée pour stocker un pool de licences (207) comprenant une ou plusieurs licences logicielles en provenance du fournisseur de logiciel (105, 205, 513) ;
une interface agencée pour recevoir une demande (209, 514) de licence logicielle de la part d'un client utilisateur final demandeur (101, 201, 511), ladite demande (209, 514) comprenant un identifiant d'utilisateur (106, 114) ;
une logique de vérification (115, 219) agencée pour recevoir ledit identifiant d'utilisateur (106, 114) et pour comparer ledit identifiant d'utilisateur (106, 114) à un ensemble d'identifiants d'utilisateur approuvés (103, 206), dans lequel la logique de vérification (115, 219) produit un indicateur de vérification uniquement lorsque les identifiants d'utilisateur (106, 114) correspondent à une entrée dans l'ensemble d'identifiants d'utilisateur approuvés (103, 206) ; et
une logique de décision (116, 220) agencée de sorte que, lorsque l'indicateur de vérification a été produit par la logique de vérification (115, 219), la logique de décision (116, 220) détermine s'il existe une licence disponible (310, 312) dans le pool de licences (207) et de telle sorte que :
lorsqu'il existe une clé de licence disponible (310, 312) dans le pool de licences (207), la logique de décision (116, 220) sélectionne la clé de licence disponible (310, 312) en tant que clé de licence sélectionnée (215) ;
**caractérisé en ce que** :
lorsqu'il n'existe pas de clé de licence disponible dans le pool de licences (207), la logique de décision envoie une demande de nouvelle clé de licence au fournisseur de logiciel (105, 205, 513) et, lorsqu'elle reçoit la nouvelle clé de licence (213, 214) du fournisseur de logiciel (105, 205, 513), sélectionne la nouvelle clé de licence (213, 214) en tant que clé de licence sélectionnée (215) ;
la logique de décision (116, 220) étant en outre agencée pour produire un jeton cryptographique (109) comprenant la clé de licence sélectionnée (215) en utilisant une fonction cryptographique ;
dans lequel le système de distribution de licence logicielle (108, 218, 512) envoie le jeton cryptographique (109) au client utilisateur final demandeur (101, 201, 511) et enregistre le jeton cryptographique (109) et l'identifiant d'utilisateur (106, 114) en tant que paire liée dans une base de données (208), dans lequel la base de données (208) liant les jetons (109) aux identifiants d'utilisateur (106, 114) est séparée du fournisseur de logiciel (105, 205, 513) ;
dans lequel le client utilisateur final demandeur (101, 201, 511) fournit le jeton cryptographique (109) au fournisseur de logiciel (105, 205, 513), qui, à réception du jeton (109), accorde l'accès au logiciel ; et
dans lequel l'identifiant d'utilisateur (106, 114) n'est pas envoyé au fournisseur de logiciel (105, 205, 513).

2. Système de distribution de licence logicielle (108, 218, 512) selon la revendication 1, dans lequel la fonction cryptographique comprend une fonction de cryptage.

3. Système de distribution de licence logicielle (108, 218, 512) selon la revendication 2, dans lequel le jeton cryptographique (109) comprend la clé de licence sélectionnée (215) et un mot de passe de licence (602) associé à la clé de licence sélectionnée (215), dans lequel le système de distribution de licence logicielle (108, 218, 512) est agencé pour définir le mot de passe de licence sur un mot de passe crypté dérivé de l'identifiant d'utilisateur (106, 114).

4. Système de distribution de licence logicielle (108, 218, 512) selon la revendication 3, dans lequel l'identifiant d'utilisateur (106, 114) est crypté pour produire le mot de passe crypté, éventuellement dans lequel un sel est ajouté à l'identifiant d'utilisateur (106, 114) avant que l'identifiant d'utilisateur (106, 114) ne soit crypté pour produire le mot de passe crypté.

5. Système de distribution de licence logicielle (108, 218, 512) selon l'une quelconque des revendications 2 à 5, dans lequel la fonction cryptographique comprend une fonction de cryptographie à clé privée, et/ou dans lequel la fonction cryptographique comprend une fonction de hachage.

6. Système de distribution de licence logicielle (108, 218, 512) selon l'une quelconque des revendications précédentes, dans lequel la fonction cryptographique comprend la combinaison de la clé de licence sélectionnée (215) avec un sel avant que le jeton cryptographique (109) ne soit généré.

7. Système de distribution de licence logicielle (108, 218, 512) selon l'une quelconque des revendications précédentes, dans lequel le client utilisateur final demandeur (101, 201, 511) utilise le jeton cryptographique (109) pour se procurer le logiciel directement auprès du fournisseur de services (105, 205, 513).

8. Système de distribution de licence logicielle (108, 218, 512) selon l'une quelconque des revendications précédentes, dans lequel le fournisseur de logiciel (105, 205, 513) est agencé pour fournir un service logiciel (204, 518).

9. Système de distribution de licence logicielle (108, 218, 512) selon la revendication 8, dans lequel le service logiciel (204, 518) comprend un réseau de communication, éventuellement dans lequel le réseau de communication comprend un réseau d'accès, en outre éventuellement dans lequel le réseau d'accès comprend un réseau Wi-Fi et/ou un réseau sans fil mobile.

10. Système de distribution de licence logicielle (108, 218, 512) selon l'une quelconque des revendications précédentes, agencé de sorte que la clé de licence sélectionnée (215) soit renvoyée au pool de licences (207) lorsque le client utilisateur final (101, 201, 511) libère ladite clé.

11. Système de distribution de licence logicielle (108, 218, 512) selon l'une quelconque des revendications précédentes, agencé pour allouer la clé de licence sélectionnée (215) au client utilisateur final (101, 201, 511) avec une limite de temps, dans lequel à l'expiration de ladite limite de temps, la clé de licence sélectionnée (215) est renvoyée au pool de licences (207).

12. Système informatique en réseau (100, 200, 510) comprenant un système de distribution de licence logicielle selon la revendication 1 (108, 218, 512), un fournisseur de logiciel (105, 205, 513) et un ou plusieurs clients utilisateurs finaux (101, 201, 511), dans lequel le système de distribution de licence logicielle (108, 218, 512) est connecté entre le fournisseur de logiciel (105, 205, 513) et les clients utilisateurs finaux (101, 201, 51).

13. Procédé d'exploitation d'un système de distribution de licence logicielle (108, 218, 512) connecté entre un fournisseur de logiciel externe (105, 205, 513) et un ou plusieurs clients utilisateurs finaux (101, 201, 511), ledit procédé comprenant :
le stockage d'un pool de licences (207) comprenant une ou plusieurs licences logicielles du fournisseur de logiciel externe (105, 205, 513) ;
la réception d'une demande (209, 514) de licence logicielle de la part d'un client utilisateur final demandeur (101, 201, 511), ladite demande (209, 514) comprenant un identifiant d'utilisateur (106, 114) ;
la comparaison dudit identifiant d'utilisateur à un ensemble d'identifiants d'utilisateur approuvés (103, 206) et la production d'un indicateur de vérification uniquement lorsque les identifiants d'utilisateur (106, 114) correspondent à une entrée dans l'ensemble d'identifiants d'utilisateur approuvés (103, 206) ;
lorsque l'indicateur de vérification a été produit, la détermination s'il existe une licence disponible (310, 312) dans le pool de licences (207) et de telle sorte que :
lorsqu'il existe une clé de licence disponible (310, 312) dans le pool de licences (207), la logique de décision (116, 220) sélectionne la clé de licence disponible (310, 312) en tant que clé de licence sélectionnée (215) ;
**caractérisé en ce que** :
lorsqu'il n'y a pas de clé de licence disponible dans le pool de licences (207), l'envoi d'une demande de nouvelle clé de licence au fournisseur de logiciel externe (105, 205, 513) et, à la réception de la nouvelle clé de licence en provenance du fournisseur de logiciel externe (105, 205, 513), la sélection de la nouvelle clé de licence en tant que clé de licence sélectionnée (215) ;
la production d'un jeton cryptographique (109) comprenant la clé de licence sélectionnée (215) en utilisant une fonction cryptographique ; et
l'envoi du jeton cryptographique (109) au client utilisateur final demandeur (101, 201, 511) et l'enregistrement du jeton cryptographique (109) et de l'identifiant d'utilisateur (106, 114) sous la forme d'une paire liée dans une base de données (208), dans lequel la base de données (208) liant les jetons (109) aux identifiants d'utilisateur (106, 114) est séparée du fournisseur de logiciel (105, 205, 513) ;
dans lequel le client utilisateur final demandeur (101, 201, 511) fournit le jeton cryptographique (109) au fournisseur de logiciel (105, 205, 513), qui, à la réception du jeton (109), accorde l'accès au logiciel ; et
dans lequel l'identifiant d'utilisateur (106, 114) n'est pas envoyé au fournisseur de logiciel (105, 205, 513).

14. Support lisible par ordinateur non transitoire comprenant des instructions qui, lorsqu'elles sont exécutées sur un processeur approprié, amènent le processeur à exécuter des étapes comprenant :
le stockage d'un pool de licences (207) comprenant une ou plusieurs licences logicielles du fournisseur de logiciel externe (105, 205, 513) ;
la réception d'une demande (209, 514) de licence logicielle de la part d'un client utilisateur final demandeur (101, 201, 511), ladite demande (209, 514) comprenant un identifiant d'utilisateur ;
la comparaison dudit identifiant d'utilisateur à un ensemble d'identifiants d'utilisateur approuvés (103, 206) et la production d'un indicateur de vérification uniquement lorsque les identifiants d'utilisateur (106, 114) correspondent à une entrée dans l'ensemble d'identifiants d'utilisateur approuvés (103, 206) ;
lorsque l'indicateur de vérification a été produit, la détermination s'il existe une licence disponible (310, 312) dans le pool de licences (207) et de telle sorte que :
lorsqu'il existe une clé de licence disponible (310, 312) dans le pool de licences (207), la logique de décision (116, 220) sélectionne la clé de licence disponible (310, 312) en tant que clé de licence sélectionnée (215) ;
**caractérisé en ce que** :
lorsqu'il n'existe pas de clé de licence disponible dans le pool de licences (207), l'envoi d'une demande de nouvelle clé de licence au fournisseur de logiciel externe (105, 205, 513) et, à la réception de la nouvelle clé de licence du fournisseur de logiciel externe (105, 205, 513), la sélection de la nouvelle clé de licence en tant que clé de licence sélectionnée (215) ;
la production d'un jeton cryptographique (109) comprenant la clé de licence sélectionnée (215) en utilisant une fonction cryptographique ; et
l'envoi du jeton cryptographique (109) au client utilisateur final demandeur (101, 201, 511) et l'enregistrement du jeton cryptographique (109) et de l'identifiant utilisateur (106, 114) sous la forme d'une paire liée dans une base de données (208), dans lequel la base de données (208) liant les jetons (109) aux identifiants d'utilisateur (106, 114) est séparée du fournisseur de logiciel (105, 205, 513) ;
dans lequel le client utilisateur final demandeur (101, 201, 511) fournit le jeton cryptographique (109) au fournisseur de logiciel (105, 205, 513), qui, à la réception du jeton (109), accorde l'accès au logiciel ; et
dans lequel l'identifiant d'utilisateur (106, 114) n'est pas envoyé au fournisseur de logiciel (105, 205, 513).
